# EUROPEAN PATENT APPLICATION

(11) **EP 2 351 489 A1**
(43) Date of publication of application: **03.08.2011**
(21) Application number: 09821928.0
(22) Date of filing: 08.10.2009
(51) Int. Cl.: A23C 21/02, A23C 9/123

(54) **FERMENTED WHEY PREPARATION AND METHOD FOR PRODUCING SAME**

(30) Priority: 23.10.2008 JP 2008272978
(71) Applicant: Meiji Co., Ltd., Tokyo 136-8908 (JP)
(72) Inventor: NAKATANI Sanae, Kanagawa 2500862 (JP)
(74) Representative: Ahner, Francis
(86) International application number: PCT/JP2009/067559
(87) International publication number: WO 2010/047230

(57) **Abstract**

This invention provides a fermented whey preparation produced by carrying out of high-temperature sterilization of an aqueous whey protein solution having a solid content of 11 to 35% by weight and a pH value adjusted to 6.5 to 8.0, then subjecting the sterilized aqueous whey protein solution to lactic acid fermentation, and homogenizing the resultant fermentation liquor. In this case, lactose contained in the sterilized aqueous whey protein solution after the high-temperature sterilization is enzymatically degraded with lactase at a stage before the lactic acid fermentation, during the lactic acid fermentation and/or after the lactic acid fermentation to enhance sweetness. The fermented whey preparation of the present invention has a good flavor provided by imparting unique sourness produced by fermentation and natural sweetness and, at the same time, has a refreshed and invigorating flavor and further has a velvety texture. Further, the fermented whey preparation has excellent thermal stability and safety.

## Description

### [CROSS-REFERENCE TO RELATED APPLICATIONS]

This application is based upon and claims the benefit of priority from the prior Japanese Patent Application No. 272978/2008, filed on October 23, 2008; the entire contents of which are incorporated herein by reference.

### [BACKGROUND OF THE INVENTION]

### Field of Invention

The present invention relates to a fermented whey preparation which has unique sourness produced by fermentation and natural sweetness and, at the same time, has a refreshed and invigorating flavor and a good texture, and a method for producing the fermented whey preparation. The present invention also relates to a beverage comprising the whey preparation and a method for producing the beverage.

### Background Art

Whey as a by-product produced, for example, in the production of cheese is known to contain a large amount of various essential amino acids, proteins, vitamins, and saccharides and thus to have a high nutrition value. On the other hand, the whey, when merely dried, has a poor flavor and as such is unsatisfactory for human consumption. Accordingly, various attempts have hitherto been made to produce foods utilizing the high nutrition value of the whey.

For example, the utilization of an aqueous solution of whey protein to give beverages has been attempted. When the aqueous solution of whey protein is sterilized at a high temperature, however, protein is thermally coagulated resulting in significantly deteriorated quality. For example, when a method is adopted which comprises adjusting the aqueous solution of whey protein to a high concentration of not less than 10% by weight, then adjusting the aqueous whey protein solution to a weakly acidic state, that is, a pH value of 6.5 or less, and then subjecting the aqueous whey protein solution to high-temperature sterilization at 90°C or above, large coagulates are disadvantageously formed. For this reason, in the mass production on a commercial scale, coagulates cannot be satisfactorily dispersed, for example, in tanks or piping. Further, the deposition or build-up of coagulates onto tanks, piping, and valves is significant. This may be causative of contamination. On the other hand, when a method is adopted which comprises adjusting an aqueous solution of whey protein to a pH value of 6.0 or less and then fermenting the aqueous solution of whey protein, for example, lactic bacteria or yeasts are less likely to exhibit their functions and, consequently, fermentation-derived unique and good flavor cannot be imparted without difficulties.

For example, Japanese Patent Application Laid-Open Publication No. 170341/1986 proposes a method for producing a whey fermented beverage. Japanese Patent Application Laid-Open Publication No. 040248/1987 proposes a method for producing a whey sour base. Further, Japanese Patent Publication No. 051046/1995 proposes a method for producing a fermented whey powder (all the above publications are applications filed by the present applicant).
These publications disclose a method comprising regulating the solid content of an aqueous whey solution to about 2 to 20% by weight (that is, regulating the concentration of the whey protein to about 1 to 13% by weight), sterilizing the aqueous whey solution, for example, at a relatively low temperature of 90°C for 10 min, then fermenting the aqueous whey solution with lactic bacteria to produce a fermented whey preparation. In these cases, sterilization under relatively low-temperature conditions (low-temperature sterilization) is indispensable. This is because, when higher-temperature conditions are adopted, coagulates occur due to thermal denaturation (thermal coagulation) of the protein which is possibly unfavorable from the viewpoint of the quality of products. On the other hand, low-temperature sterilization has not been always satisfactory from the viewpoint of sterilization efficiency.

Japanese Patent Application Laid-Open Publication No. 238614/1997 (Japanese Patent Publication No. 3417513) proposes a method for producing a whey. This publication discloses a method for producing a white whey preparation having excellent thermal stability in which, after the regulation of the solid content of an aqueous whey solution to about 0.1 to 10% by weight (that is, regulating the concentration of the whey protein to about 0.5 to 1.2% by weight) and the regulation of the pH value to 5.5 to 6.5, the aqueous whey solution is sterilized at a high temperature of 90°C or above, for example, at 120°C (high temperature sterilization) for 2 sec, to bring the whey protein to micelles (colloidal particles with a particle diameter of 20 to 600 µm). In this case, it is particularly indispensable that the solid content of the aqueous whey solution be brought to not more than 10% by weight, that is, the concentration of the whey protein be brought to not more than 1.2% by weight, and, further, the aqueous whey solution is rendered weakly acidic, i.e., is adjusted to pH 5.5 to 6.5. These conditions are regarded as necessary for forming micelles of the whey protein and producing a white whey.
Accordingly, here it is not contemplated that the solid content of the aqueous whey solution is rendered larger than 10% by weight and the pH value is rendered larger than 6.5. It is a matter of course that, in this case, any method for ensuring good thermal stability is not suggested. Fermentation, for example, with lactic bacteria or yeast is also not contemplated.

Regarding the degradation of lactose in the lactic acid fermentation, for example, Japanese Patent Publication No. 3389377 discloses a method for producing a fermented milk by degrading lactose. In this case, however, unlike the present invention in which an aqueous whey protein solution is used, milk per se is used as a raw material. Further improving, for example, flavor, properties, and texture of the resultant fermentation product is not considered at all, and the technique disclosed in this patent is different from the technique of the present invention.

### [SUMMARY OF THE INVENTION]

The present inventors have now found that high-temperature sterilization of an aqueous whey protein solution regulated to a solid content of 11 to 35% by weight and a pH value of 6.5 to 8.0 provides a coagulate-containing aqueous solution which, when as such subjected to lactic acid fermentation to prepare a fermentation liquor which is then homogenized, can unexpectedly produce a good fermented whey preparation which can simultaneously realize excellent flavor and texture unattainable by prior art techniques.
In this case, not only the lactic acid fermentation with lactic bacteria but also lactic acid fermentation with yeast could provide a good whey preparation. Further, the present inventors have attempted enzymatic degradation of lactose in the aqueous solution into glucose and galactose at a stage during, before, or after lactic acid fermentation by adding lactase to the aqueous whey protein solution, which has been subjected to high-temperature sterilization, at a stage before the lactic acid fermentation, during the lactic acid fermentation, or after the lactic acid fermentation and, as a result, have found that the enzymatic reaction does not have a tendency toward the inhibition of the lactic acid fermentation and the resultant fermented whey preparation has unique sourness and natural sweetness imparted by the fermentation and has refreshed and invigorating flavor that is rare in fermentation products and is unattainable by the prior art technique. Thus, the present inventions have succeeded in further improving the flavor of the fermented whey preparation. This flavor of the fermented whey preparation has an enhanced natural sweetness as compared with the case where lactose is not degraded with the enzyme (lactase), and is a further improved flavor by virtue of an excellent balance between the sweetness and the sourness produced by the fermentation. Further, the fermented whey preparation thus obtained had excellent thermal stability while having a velvety texture and a suitable viscosity. Furthermore, this fermented whey preparation has been sterilized at a high temperature. Therefore, the fermented whey preparation does not contain unfavorable bacteria such as thermophilic bacteria and thus is also excellent in hygiene. Furthermore, when this fermented whey preparation is used as a material, for example, for fruit juice-type beverages to produce beverages, beverages having excellent flavor and properties could be produced. The present invention has been made based on such findings.

An object of the present invention is to provide a fermented whey preparation which has a good flavor provided by imparting a fermentation-derived unique sourness and a natural sweetness and, at the same time, has a refreshed and invigorating flavor and further has a velvety texture and further has excellent thermal stability and safety. Another object of the present invention is to provide a method for producing such a fermented whey preparation.

The fermented whey preparation according to the present invention is produced by carriying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor. In this case, lactose contained in the sterilized aqueous whey protein solution after the high-temperature sterilization is enzymatically degraded with lactase at a stage before the lactic acid fermentation, during the lactic acid fermentation and/or after the lactic acid fermentation to enhance sweetness.

In a preferred embodiment of the present invention, the fermented whey preparation is produced by enzymatically degrading lactose with lactase at a stage either both before the lactic acid fermentation and during the lactic acid fermentation or during the lactic acid fermentation.

Further, according to the present invention, typically, in the lactic acid fermentation of the aqueous whey protein solution, lactic acid is produced by fermentation with lactic bacteria or yeast.

In a preferred embodiment of the present invention, the high-temperature sterilization is carried out at a temperature of 91°C to 99°C for 5 to 15 min, or at a temperature of 100°C to 150°C for 1 to 30 sec.

In a further preferred embodiment of the present invention, the aqueous whey protein solution is adjusted to pH 6.6 to 7.6.

In the above step, when the sterilized aqueous solution after the high-temperature sterilization contains coagulates, the coagulates have a particle diameter of 2 to 100 µm and the aqueous solution as such is subjected to the step of lactic acid fermentation.

According to the present invention, there is provided a beverage comprising a fermented whey preparation according to the present invention.
Preferably, the beverage according to the present invention is produced by adding an additive component for beverages to the above fermented whey preparation according to the present invention and subjecting the obtained mixture to high-temperature sterilization treatment at 100°C to 150°C for 1 to 30 sec.

Further, according to the present invention, there is provided a method for producing a fermented whey preparation, comprising carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor, characterized that the method comprises the steps of enzymatically degrading lactose contained in the sterilied aqueous whey protein solution obtained by the high-temperature sterilization with lactase, before the lactic acid fermentation, during the lactic acid fermentation and/or after the lactic acid fermentation, to enhance sweetness. Preferably, in the method, the enzymatic degradation of lactose with lactase is carried out at a stage either both before the lactic acid fermentation and during the lactic acid fermentation or during the lactic acid fermentation. More preferably, the method comprises adjusting the fermentation time to adjust sourness produced by lactic acid fermentation and sweetness produced by enzymatic degradation with lactase, whereby the flavor of the whole whey preparation can be adjusted.

In one preferred embodiment of the present invention, in the method, the high-temperature sterilization is carried out at a temperature of 91°C to 99°C for 5 to 15 min. Alternatively, the high-temperature sterilization is carried out at a temperature of 100°C to 150°C for 1 to 30 sec. Preferably, the aqueous whey protein solution to be sterilized at the high temperature has been adjusted to pH 6.6 to 7.6.

In the method, preferably, when the sterilized aqueous solution obtained by the high-temperature sterilization contains coagulates, the coagulates have a particle diameter of 2 to 100 µm and the aqueous solution as such is subjected to the step of lactic acid fermentation.

In a preferred embodiment of the present invention, the method for producing a beverage comprises the steps of adding an additive component for beverages to the above fermented whey preparation and subjecting the mixture to high-temperature sterilization treatment at 100°C to 150°C for 1 to 30 sec to produce a beverage.

In the present invention, a fermented whey preparation, which possesses nonconventional flavor and texture and thermal stability and is also excellent in safety, and a beverage using the fermented whey preparation can be provided by conducting sterilization under such conditions that have hitherto been avoided as causing coagulates due to thermal denaturation of proteins, then conducting lactic acid fermentation, in such a state that coagulates are contained, and further homogenizing the fermentation liquor. The fermented whey preparation has an enhanced natural sweetness imparted by the degradation of lactose. Further, as described above, the fermented whey preparation according to the present invention has a good flavor provided by imparting a fermentation-derived unique sourness and a natural sweetness and, at the same time, has a refreshed and invigorating flavor and further has a velvety texture. The fermented whey preparation is also excellent in thermal stability and safety. The fermented whey preparation according to the present invention can be said to have unconventional properties (texture) and flavors (thickened feeling), for example, as whey-derived starting materials, preparations, and beverages. Further, in the present invention, the lactic acid fermentation can be carried out at a temperature around the optimal temperature of the lactase enzyme (for example, 40°C). Accordingly, the lactic acid fermentation and the enzymatic reaction can be simultaneously carried out. As a result, the fermented whey preparation can be more efficiently produced under conditions that are suitable for production of the fermented whey preparation on commercial scale. Further, in the present invention, it has been confirmed that the enzymatic reaction does not inhibit the lactic acid fermentation. Accordingly, both the enzymatic reaction and the lactic acid fermentation can be hygienically carried out while suppression of the proliferation of various unfavorable bacteria such as thermophilic bacteria under such conditions that lactic bacteria are predominant. The fermented whey preparation having the above properties and the beverage comprising the fermented whey preparation can be advantageously distinguished from conventional products and have high commercial values.

### [BRIEF DESCRIPTION OF THE DRAWINGS]

[Fig. 1] Fig. 1 is a flow sheet showing an embodiment of a production method of a fermented whey preparation according to the present invention.
[Fig. 2] Fig. 2 is a flow sheet showing an embodiment of a beverage according to the present invention.

### [DETAILED DESCRIPTION OF THE INVENTION]

### Fermented whey preparation

As described above, the fermented whey preparation according to the present invention is produced by carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor. In this case, lactose contained in the aqueous whey protein solution obtained by the high-temperature sterilization is enzymatically degraded with lactase at a stage before the lactic acid fermentation, during the lactic acid fermentation and/or after the lactic acid fermentation to enhance sweetness.

So far as the present inventors know, there have hitherto been little or no report about a method in which, after bringing the solid content of an aqueous whey protein solution to more than 10% by weight, the aqueous whey protein solution is sterilized at a high temperature above 90°C followed by fermentation with lactic bacteria or yeast to produce a fermented whey preparation. The reason for this is believed to reside in that, when the aqueous whey protein solution is sterilized, for example, at an ultrahigh temperature (UHT), the whey protein is thermally coagulated resulting in significantly deteriorated quality. For example, when a method is adopted in which, after the regulation of the aqueous whey protein solution to a high concentration, the aqueous solution is rendered weakly acidic, that is, is brought to a pH value of not more than 6.5 followed by sterilization at a high temperature of above 90°C, huge coagulates are disadvantageously produced.

For this reason, in mass production on a commercial scale, coagulates are less likely to be dispersed, for example, in tanks or piping. Further, the deposition or build-up of coagulates onto tanks, piping, and valves is significant. This is causative of contamination. In the prior art, a method has been generally adopted in which, while avoiding the production of coagulates, even though coagulates are formed, the step of fermentation is carried out after homogenization or other treatment. When the aqueous whey protein solution is rendered weakly acidic to a pH value of 6.5 or less before the fermentation, the function of lactic bacteria is less likely to exhibit and the fermentation is less likely to proceed. Accordingly, in some cases, a fermentation-derived unique and good flavor cannot be achieved without difficulties. On the other hand, when the aqueous whey protein solution has a pH value of more than 8.0, an alkaline nature-derived flavor is so strong that a flavor unfavorable as a starting material for beverages is sometimes produced.

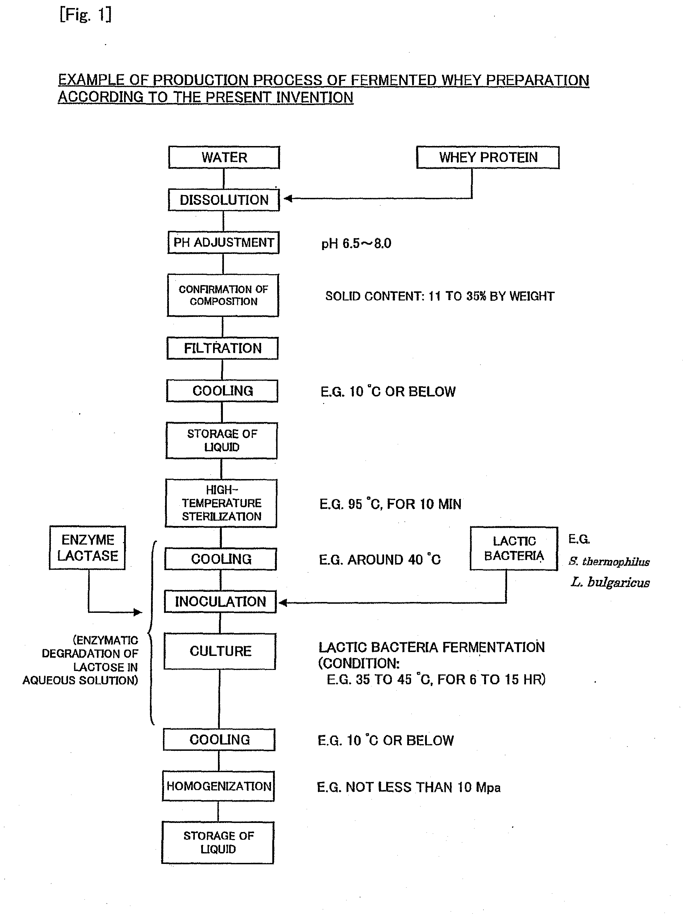

The production process of a fermented whey preparation according to the present invention will be described. An example of a flow sheet of the production process is shown in Fig. 1.

The term "whey protein" as used herein connotes undiluted solutions and concentrates of whey and reduction solutions of whey powder and the like. Whey proteins usable herein include whey protein concentrates (WPCs), whey protein isolates (WPIs), sweet whey powders, desalted whey powders, and nonfat dry milks. These why proteins may be used in combination. Commercially available products of whey proteins may also be used. Typical examples of the composition of major ingredients of whey are as follows. For WPC, for example, the solid content is 95.5%, and, in this case, the protein content, lactose content, and ash content are 76.0%, 12.0%, and 2.5%, respectively. For WPI, for example, the solid content is 94.1%, and, in this case, the protein content, lactose content, and ash content are 90.0%, 1.7%, and 1.8%, respectively. For the sweet whey powder, for example, the solid content is 97.0%, and, in this case, the protein content, lactose content, and ash content are 12.0%, 75.5%, and 8.5%, respectively. For the desalted whey powder, for example, the solid content is 98.1%, and, in this case, the protein content, lactose content, and ash content are 11.8%, 79.7%, and 5.6%, respectively. For the nonfat dry milk, for example, the solid content is 95.5%, and, in this case, the protein content, lactose content, and ash content are 34.0%, 53.5%, and 8.0%, respectively.

If necessary, the content (concentration) of the protein can easily be measured by conventional method and apparatus, for example, Kjeldahl method or Lowry method.

The whey protein used is preferably WPC, a sweet whey powder, a desalted whey powder, or a mixture of these materials. A mixture of a sweet whey powder with WPC is more preferred. When the mixture is used, the mixing ratio (on a weight basis) is preferably 1 : 2 to 2 : 1, more preferably 1 : 1 to 2 : 1.

In the aqueous whey protein solution used, the solid content is preferably 11 to 35% by weight, more preferably 13 to 30% by weight, still more preferably 15 to 25% by weight. In this case, the content of the whey protein is preferably 1.3 to 4.5% by weight, more preferably 1.5 to 4% by weight, still more preferably 1.7 to 3% by weight. The above-defined solid content range and whey protein content range are preferred from the viewpoint of denaturing the whey protein to form coagulates having a proper particle diameter.

When the whey protein is dissolved in water, if necessary, the temperature may be brought to about 40 to 60°C and, further, for example, a power blender, a homomixer, or a high-speed agitator, may if necessary be used as a dissolver.

In conventional lactic beverages and the like, in many cases, the solid content is brought to about 5 to 15% by weight. This is carried out to avoid deposition or other problems involved in the production process and from the viewpoints of flavors, textures and the like. In the present invention, a strong fermentation-derived unique and good flavor could have been realized by enhancing the solid content of the aqueous whey protein solution, bringing the concentration of the milk component to a high level, and conducting fermentation with lactic bacteria or yeast. In this case, the prevention of the production of excessively large coagulates is also important from the viewpoint of production properties of actual products. The present invention has succeeded in producing a fermented whey preparation having a good flavor by suppressing the size of coagulates to a suitable level and utilizing the coagulates as such.

In the present invention, the solid content of the aqueous solution can easily be determined by conventional method/apparatus, for example, a simple water content measuring method or a sand mulling method.

Before the high-temperature sterilization treatment, the aqueous whey protein solution used is adjusted to pH 6.5 to 8.0, preferably pH 6.6 to 7.8, more preferably pH 6.6 to 7.6, still more preferably pH 6.8 to 7.4, still further preferably pH 6.8 to 7.2, most preferably about pH 7.0.
The pH adjustment is preferably carried out with a pH adjustor. The pH adjustor to be used is not particularly limited so far as the pH adjustor can adjust the pH value to the above range and has safety high enough to be usable as foods. Typically, the pH adjustor is selected from the group consisting of sodium hydroxide, potassium hydroxide, sodium hydrogencarbonate, and sodium carbonate. These substances may be used in combination. In a preferred embodiment of the present invention, the pH adjustor is sodium hydroxide.

The amount of the pH adjustor used may be properly varied depending, for example, upon the type of the pH adjustor used, a target pH value to be increased, and the state of the aqueous solution added (for example, its temperature and pH). For example, when sodium hydroxide is used as the pH adjustor, the amount of sodium hydroxide used is typically 0.01 to 0.5% by weight, preferably 0.01 to 0.3% by weight, in terms of concentration.

In the present invention, at first, an aqueous whey protein solution having a solid content of 11 to 35% by weight and a pH value adjusted to 6.5 to 8.0 is subjected to high-temperature sterilization treatment. Heating conditions for high-temperature sterilization treatment correspond to conventional sterilization treatment conditions. In general, beverages containing milk or whey are sterilized by various methods before shipping as products. Here high-temperature thermal sterilization conditions mean conditions used as an embodiment of the conventional sterilization treatment. Accordingly, heating conditions for high-temperature sterilization treatment in the present invention may be used without particular limitation so far as the conditions are thermal sterilization treatment conditions commonly used in the field of beverages and foods. In the present invention, heating conditions of a temperature above 90°C are particularly used. The above conditions are those which can cause thermal denaturation of proteins. Various unfavorable bacteria such as thermophilic bacteria can be satisfactorily killed by the high-temperature sterilization. Accordingly, the hygiene is improved, and, for example, contamination in fermentation in the later step can be easily prevented.

In a preferred embodiment of the present invention, the high-temperature sterilization treatment is carried out, for example, at 91°C to 99°C for about 5 to 15 min, preferably at 92°C to 98°C for about 7 to 13 min, more preferably at 93°C to 97°C for about 8 to 12 min, particularly preferably at about 95°C for about 10 min. In another preferred embodiment of the present invention, the high-temperature sterilization treatment is carried out, for example, at 100°C to 150°C for about 1 to 30 sec, preferably at 110°C to 140°C for about 1 to 20 sec, more preferably at 115°C to 135°C for about 1 to 10 sec, still more preferably at 120°C to 130°C for about 1 to 5 sec, particularly preferably at about 120°C for about 3 sec. After the high-temperature sterilization, if necessary, the treated aqueous solution is cooled.
The temperature to which the treated aqueous solution is cooled, can be set based on the fermentation temperature in the subsequent fermentation step and is, for example, about 30 to 50°C.

In the high-temperature sterilization treatment, the aqueous solution may be further pressurized. In general, when the thermal sterilization treatment is carried out, the sterilization pressure is brought, for example, to about 1 to 10 kg/cm², for example, from the viewpoint of preventing boiling of the aqueous solution. In the sterilization treatment in the present invention, in addition to heating, the above pressure may be applied. Apparatuses usable for the high-temperature sterilization treatment include, for example, plate heat exchangers, tube heat exchangers, steam injection sterilizers, steam infusion sterilizers, and electrical heating sterilizers.

In the present invention, upon the high-temperature sterilization treatment, the resultant aqueous solution contains coagulates. The particle diameters of the coagulates are not huge, and the particle diameters are suitable for avoiding immediate precipitation. Typically, the aqueous solution may contain coagulates having a particle diameter of 1 to 100 µm, preferably 2 to 80 µm, more preferably 4 to 60 µm, still more preferably 5 to 50 µm.
Thus, the coagulates have a dimension which does not immediately cause precipitation. Therefore, in this state, lactic bacteria or yeast may be added to the aqueous solution after the high-temperature sterilization to perform the next step, that is, lactic acid fermentation treatment.
The particle diameter of the coagulates may be measured, for example, with a laser diffraction particle size distribution measuring apparatus SALD-2100 (manufactured by SHIMADZU CORPORATION).

In the present invention, the lactic acid fermentation is fermentation in which an aqueous whey protein solution is fermented with a predetermined microorganism under predetermined fermentation conditions which will be described later to produce an organic acid (for example, lactic acid, succinic acid, or malic acid), particularly lactic acid. Either lactic bacteria or yeasts are preferably used as the microorganism usable in the lactic acid fermentation. In the lactic acid fermentation according to the present invention, whether or not an organic acid, particularly lactic acid, is produced in the fermentation and the production level of the organic acid, can be confirmed by measuring the acidity (%) of an object solution.

The "acidity" may be determined by Japanese Laws Relating To Cow's Milk (Japan Dairy Industry Association, March 2004), "5 Nyu Oyobi Nyuseihin No Sando No Sokuteiho (Method for measuring acidity of milk and dairy products)" p. 56. Specifically, 10 ml of water free from carbon dioxide is added to 10 ml of a sample to dilute the sample. A phenolphthalein liquid (0.5 ml) is added as an indicator, and titration is carried out with a 0.1 mol/L sodium hydroxide solution regarding, as the end point, a point that a slightly reddish color does not disappear for 30 sec. The percentage lactic acid per 100 g of the sample is determined from the titer and is regarded as the acidity (%). When the acidity of lactic acid is determined, this acidity is particularly referred to as "lactic acid acidity" (%). In this case, 1 ml of 0.1 mol/L sodium hydroxide solution corresponds to 9 mg of lactic acid. The indicator is prepared by dissolving 1 g of phenolphthalein in 50% ethanol to a volume of 100 ml.

Any lactic bacteria may be used without particular limitation so far as they are usable in the whey fermentation, and examples thereof include the genus Lactobacillus, the genus Streptococcus, and the genus Bifidobacterium. Specific examples thereof include lactobacillus strains Lactobacillus bulgaricus and Streptococcus thermophilus.

Any yeast may be used without particular limitation so far as it is usable in the whey fermentation, and examples thereof include the genus Candida, and the genus Kluveromyces. Specific examples thereof include yeast strains Candida Kefyr and Kluyveromyces Marxianus.

In the present invention, in addition to lactic acid fermentation with lactic bacteria, lactic acid fermentation with yeast can be carried out. When the lactic acid fermentation is carried out with yeast, a flavor different from that produced in the fermentation with lactic bacteria can be produced. This can realize the production of various good whey preparations. In the present invention, if necessary, a mixture of the fermentation liquor (or whey preparation) produced by the lactic acid fermentation with lactic bacteria with the fermentation liquor (or whey preparation) produced by fermentation with yeast may be used.

The amount of the bacteria added (the amount of the bacteria as a starter) is, for example, such that the concentration of lactic bacteria (or yeast) in the aqueous solution is about 10⁹ cfu/mL. Preferably, the amount of the bacteria added is about 0.1 to 3% by weight based on the weight of the aqueous whey protein solution after the sterilization, and an example of the addition amount of the bacteria is 2% by weight.

Conditions for fermentation with lactic bacteria are, for example, 30 to 50°C and 1 to 40 hr, preferably 35 to 45°C and 2 to 20 hr, more preferably 37 to 43°C and 3 to 10 hr.

Conditions for fermentation with yeast are, for example, 20 to 40°C and 1 to 72 hr, preferably 25 to 35°C and 12 to 60 hr, more preferably 27 to 33°C and 24 to 48 hr.

In the present invention, in addition to the lactic acid fermentation, lactose contained in the aqueous whey protein solution after the high-temperature sterilization is enzymatically degraded with lactase into glucose and galactose before the lactic acid fermentation, during the lactic acid fermentation and/or after the lactic acid fermentation, whereby enhanced sweetness produced by the lactose degradation is imparted to the fermented whey preparation.

Any lactase that can degrade lactose contained in the aqueous whey protein solution into glucose and galactose can be used without particular limitation. For example, bacteria- or yeast-derived lactose can be used. The optimal pH of lactase usable in the present invention may be, for example, in the range of 5.5 to 7.5, and the optimal temperature may be 25 to 50°C.

In the present invention, preferably, the enzymatic reaction is usually allowed to proceed through lactic acid fermentation of the aqueous whey protein solution. Preferably, lactase is selected so that the enzymatic reaction proceeds under conditions for lactic acid fermentation. If necessary, an enzyme treatment step of allowing the enzymatic reaction to proceed may be provided separately from the lactic acid fermentation treatment. For example, from the viewpoint of simplifying the process, preferably, the enzymatic reaction with lactase also proceeds under the same conditions as in the lactic acid fermentation or conditions adopted immediately before or immediately after the lactic acid fermentation.

Accordingly, lactase which has an optimal temperature that is equal to the temperature adopted in the lactic acid fermentation according to the present invention and has an optimal pH value including a pH value which the aqueous whey protein solution after the high-temperature sterilization may have, is preferably selected. Therefore, when the fact that the aqueous whey protein solution is subjected to the enzymatic reaction in a period after the high-temperature sterilization and during, before, or after the lactic acid fermentation is taken into consideration, preferably, the optimal pH and optimal temperature for lactase used are 6.0 to 7.0 and 35 to 45°C, respectively.

Lactases usable in the present invention include, for example, Kluyveromyces Lacits, Kluveromyces Fragilis, Aspergillus niger, and Aspergillus oryzae.

In another more preferred embodiment of the present invention, the lactase used in the lactose degradation has such a property that is deactived at a pH value around 5.0 to 5.5 or less.
When the lactase used has such a property that is deactivated depending upon pH, the pH value of the aqueous whey protein solution gradually lowers as the lactic acid fermentation proceeds. Accordingly, the enzyme is automatically deactivated at a stage where the lactic acid fermentation has proceeded to some extent, and, as a result, the enzymatic reaction can be stopped. That is, the progress and stop of the lactic acid fermentation and enzymatic reaction can be regulated by simply regulating the amount of the enzyme used and the fermentation time in the lactic acid fermentation. The lactase (enzyme) which can be deactivated depending upon the pH value may be, for example, a commercially available lactase.

The timing at which the lactase is added to the aqueous whey protein solution subjected to the high-temperature sterilization may be any time in a period between after the high-temperature sterilization and before the completion of the production of the fermented whey preparation. Accordingly, for example, the lactase may be added to the aqueous whey protein solution at a stage between after cooling of the aqueous whey protein solution to a proper extent, after the high-temperature sterilization, and before the lactic acid fermentation. This is advantageous in that an enzymatic reaction involving lactose degradation can be allowed to proceed in a period between immediately after the introduction of the lactase and the start of the lactic acid fermentation and, further, the enzymatic reaction can be also allowed to proceed after the start of the lactic acid fermentation.

Alternatively, for example, the lactase may be introduced into the aqueous whey protein solution simultaneously with the start of the lactic acid fermentation or immediately before or immediately after the start of the lactic acid fermentation, in other words, simultaneously with, immediately before or immediately after the introduction of the lactic bacteria as the starter. Further, the lactase may be introduced into the aqueous whey protein solution in a period between the completion of the introduction of the lactic bacteria and the completion of the lactic acid fermentation. In these cases, the lactose contained in the aqueous whey protein solution can be degraded by the enzymatic reaction in parallel with the lactic acid fermentation.

Thus, in the present invention, the lactase can be introduced into the aqueous whey protein solution at a stage before the lactic acid fermentation, simultaneously with the introduction of the lactic bacteria as the starter, immediately before or immediately after the introduction of the lactic bacteria, or in a period between after the introduction of the lactic bacteria and the completion of the lactic acid fermentation. The timing of the introduction of the lactase may be properly selected while taking into consideration, for example, the desired degree of the enzymatic degradation, the amount of the enzyme introduced, and the desired enzymatic reaction time. Accordingly, in one preferred embodiment of the present invention, the enzymatic degradation of lactose with lactase can be carried out either both before the lactic acid fermentation and during the lactic acid fermentation or only during the lactic acid fermentation.

In the present invention, a method may also be adopted in which the lactase is added to the aqueous whey protein solution after the lactic acid fermentation. In this case, preferably, an enzymatic reaction step is provided in which lactase is added to the aqueous whey protein solution after the lactic acid fermentation step to allow the enzymatic reaction to proceed separately from the lactic acid fermentation step. The enzymatic reaction step may be carried out immediately after the lactic acid fermentation step. Alternatively, the enzymatic reaction step may be provided, for example, after the homogenization treatment of the aqueous whey protein solution. In starting the enzymatic reaction step, if necessary, the pH value and reaction temperature of the aqueous solution may be further properly regulated while taking into consideration the optimal pH and optimal temperature of the lactase.

In the present invention, the amount of lactase used is, for example, 10,000 to 100,000 IU/g, preferably 30,000 to 70,000 IU/g, more preferably 40,000 to 60,000 IU/g.

In one preferred embodiment of the present invention, when the enzymatic degradation of lactose with lactase is carried out at a stage either both before the lactic acid fermentation and during the lactic acid fermentation or only during the lactic acid fermentation, both sourness produced by the lactic acid fermentation and sweetness produced by the enzymatic degradation with the lactase are adjusted by regulating the fermentation time, whereby the flavor of the whole whey preparation can be adjusted. Specifically, when the lactic acid fermentation time is excessively short, the fermentation per se is unsatisfactory. Further, in this case, the enzymatic reaction also does not proceed satisfactorily. On the other hand, when the lactic acid fermentation time is excessively long, the lactic acid fermentation excessively proceeds as compared with the enzymatic reaction and, consequently, the lactic acid-derived sourness is excessively strong. Accordingly, preferably, the lactic acid fermentation time is set so that the sourness produced by the lactic acid fermentation and sweetness produced by the enzymatic degradation with the lactase are maintained at a proper balance.

Regarding the enzymatic reaction, after the completion of the reaction, if necessary, a deactivation treatment (for example, heat treatment) step of deactivating the enzyme may be further provided.

In the present invention, after the lactic acid fermentation, the resultant fermentation liquor is homogenized to reduce the size of the coagulates contained in the fermentation liquor. When the fermentation liquor is homogenized, the homogenization is carried out in such a state that the lactic bacteria (or yeast) and metabolites thereof are contained. That is, the fermentation liquor as such is homogenized. The homogenization of the fermentation liquor as such is important from the viewpoints of imparting suitable viscosity and stability, that is, excellent texture and flavor and high storage stability, to the fermentation liquor.

The viscosity of the fermentation liquor may be, for example, 10 to 300 cp, preferably 15 to 250 cp, more preferably 20 to 200 cp. When beverages are produced with the fermentation liquor according to the present invention, the viscosity of the fermentation liquor affects beverages to impart a suitable viscosity to the beverages. When the viscosity of the fermentation liquor and beverage is excessively high, handling is sometimes difficult in the actual production. Accordingly, if necessary, in consideration of handleability in the production process and the like, the production conditions of the fermentation liquor may be changed, or the viscosity of the produced fermentation liquor may be modified.

When the homogenization treatment is carried out, for example, with a homogenizer, the homogenization treatment may be carried out under conditions of about 10 to 60°C, about 10 to 50 MPa, and about 100 to 1000 L/hr, preferably 12 to 25 MPa. If necessary, the homogenization treatment may be carried out a plurality of times while changing the homogenization conditions. In a specific example of the homogenization treatment, the homogenization treatment may be carried out in such a manner that first-stage homogenization treatment is carried out at about 20°C and 8 MPa followed by second-stage homogenization treatment at about 20°C and 4 MPa.

### Beverage

According to another aspect of the present invention, there is provided a beverage comprising a fermented whey preparation according to the present invention. A desired beverage may be produced by adding any desired component to the fermented whey preparation according to the present invention.

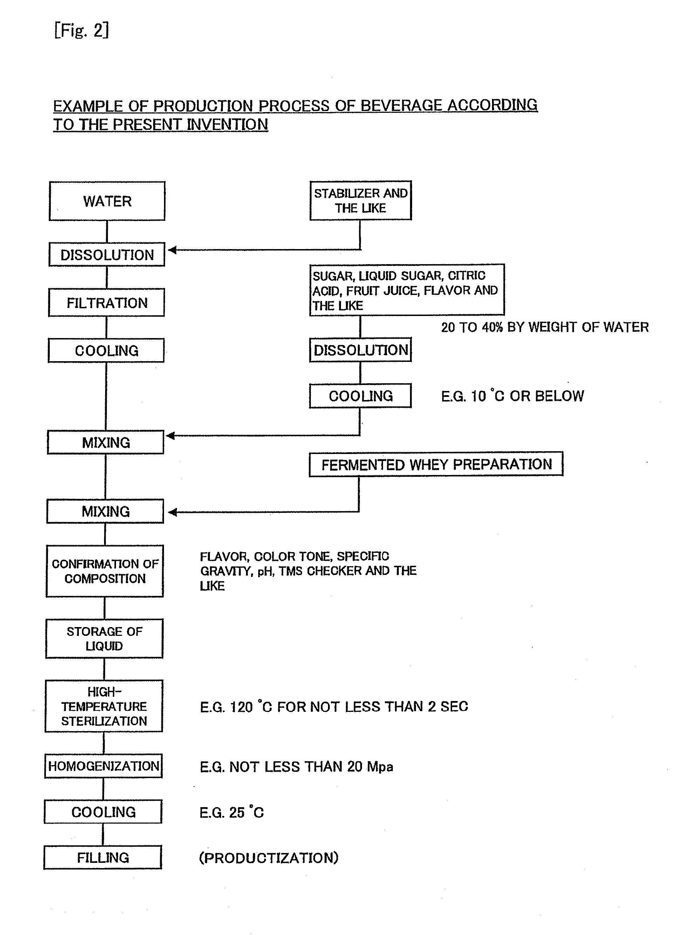

An example of a flow sheet in a production process of a beverage according to the present invention is shown in Fig. 2.

Specifically, an additive component, for beverages, including a stabilizer is dissolved in water (for example, deionized water) as a starting material, and the solution is mixed with the above fermented whey preparation. After the mixing, if necessary, the mixture may be further emulsified followed by high-temperature sterilization. Conditions in this case are high-temperature sterilization conditions commonly adopted, for example, in beverages, for example, 100 to 150°C and about 1 to 30 sec.

Accordingly, in another preferred embodiment of the present invention, this beverage is produced by further adding additive components for beverages to the fermented whey preparation according to the present invention and subjecting the mixture to high-temperature sterilization at 100 to 150°C for about 1 to 30 sec.

In a preferred embodiment of the present invention, the high-temperature sterilization treatment in the beverage production process may be carried out under conventional heating conditions well known in a person having ordinary skill in the art, preferably under conditions of 110 to 140°C and about 1 to 20 sec, more preferably 115 to 135°C and about 1 to 10 sec, still more preferably 120 to 130°C and 1 to 5 sec, particularly preferably 120°C and about 3 sec.

In the beverage production according to the present invention, any additive component (additive component for beverages) may be used without particular limitation so far as the additive component is commonly used for beverages. Such components include, for example, stabilizers such as pectins, soybean polysaccharides, and CMCs (carboxymethylcelluloses), sugars, granulated sugars, liquid sugars (for example, glucose fructose liquid sugars), caseins, crystalline celluloses, proteases, perfumes (for example, orange flavors, apple flavors, and yogurt flavors), fruit juices (for example, fruit juices of apples), fruits or purees (for example, apple purees), and acidulants (for example, citric acid).

The amount of the additive component used is, for example, about 20 to 40% by weight, based on the fermented whey preparation, for example, for sugars and fruit juices, and is approximately a few percents by weight, for example, for perfumes and acidulants. The addition amount in the above-defined range is advantageous for the production of beverages which maintains flavors and textures inherent in the fermented whey preparation.

After the sterilization treatment, if necessary, the resultant beverage may be further homogenized. The homogenization may be carried out with a homogenizer, for example, under conditions of 80 to 85°C and 25 MPa (first stage: 20 MPa, second stage: 5 MPa).

Thereafter, if necessary, the step of cooling (for example, cooled to about 25°C) may be carried out to produce a beverage according to the present invention.

The beverage produced according to the present invention is a beverage having excellent flavor and the like and may contain particles, for example, having a size of about 0.5 to 5 µm. Although the beverage according to the present invention may contain such fine particles, in this case, the percentage settling upon centrifugation is preferably not more than 2%. This means that the beverage has such a property that precipitation hardly takes places.

In the present specification, expressions of values using "about" or "level" include a variation in value which is tolerable by a person having ordinary skill in the art for attaining an object by setting the value.

### [EXAMPLES]

The present invention is further illustrated by the following Examples that are not intended as a limitation of the invention.

### Example 1 (Present invention): Preparation of fermented whey preparation (where lactic bacteria and lactase were used)

A sweet whey powder (manufactured by Meiji Dairies Corporation) (140 g) was provided as whey proteins and was dissolved in deionized water to give aqueous whey protein solutions having a solid content of 14% by weight (aqueous whey solution). Further, the aqueous whey protein solution was adjusted to pH about 7.0 by the addition of sodium hydroxide as a pH adjustor. The aqueous whey protein solutions were then heat sterilized at 95°C for 10 min with hot water. After the sterilization, the aqueous solutions were observed. As a result, it was found that coagulated particles having a size of less than 100 µm (average particle diameter 3 µm) were contained. The aqueous solutions thus obtained were cooled to 43°C.

Next, 0.1% by weight, based on the total amount of the aqueous solution, of a freeze concentrate of a lactic bacteria starter (separated from "Bulgaria Yogurt" (tradename), manufactured by Meiji Dairies Corporation) was added to these aqueous whey protein solutions. Further, 0.04% by weight (50,000 IU/g) of lactase (GODO-TNL, manufactured by GODO SHUSEI CO., LTD.) was added, and the mixture was held at 43°C for lactic acid fermentation.

For each time point from the start of the lactic acid fermentation to six hours after the start of the lactic acid fermentation, the pH value, acidity (%), lactose concentration (g/L), glucose concentration (g/L), and galactose concentration (g/L) of the aqueous whey protein solution (aqueous whey solution) were measured. Further, the flavor of the aqueous whey protein solution at each of the points was evaluated according to a sensory evaluation method by five expert panelists.

As described above, the acidity was determined according to Japanese Laws Relating To Cow's Milk (Japan Dairy Industry Association, March 2004), "5 Nyu Oyobi Nyuseihin No Sando No Sokuteiho (Method for measuring acidity of milk and dairy products)" p. 56. Specifically, 10 ml of water free from carbon dioxide is added to 10 ml of a sample to dilute the sample. A phenolphthalein liquid (0.5 ml) is added as an indicator, and titration is carried out with a 0.1 mol/L sodium hydroxide solution regarding, as the end point, a point that a slightly reddish color does not disappear for 30 sec. The percentage lactic acid per 100 g of the sample is determined from the titer and is regarded as the acidity (%).
Further, the lactose concentration, glucose concentration, and galactose concentration were measured by HPLC (column; Shodex Normal Phase Columns for Saccharides Analysis Asahipak NH2P-50 (4.6 × 250 mm), manufactured by Showa Denko K.K.), mobile phase; acetonitrile : ultrapure water = 3 : 1, detector; Jaco 830-RI, measuring temperature; 40°C).

The results were as shown in Table 1.
The results of the sensory evaluation show that the sweetness and the sourness can be freely adjusted by regulating the fermentation time (reaction time).

Next, the fermentation liquor containing lactic bacteria and the metabolite thereof was homogenized with a homogenizer set to about 10 MPa and about 100 L/hr.
The fermented whey preparations (Example) thus obtained were preparations that had desired flavor and properties (texture) contemplated in the present invention and were also excellent from a hygiene standpoint.

[Table 1]

**Table 1**

| Elapsed time [hr] | pH [-] | Acidity [%] | Lactose [g/L] | Glucose [g/L] | Galactose [g/L] | Flavor |
|---|---|---|---|---|---|---|
| 0.0 | 6.32 | 0.14 | 95 | 2 | 0 | |
| 1.0 | 6.26 | 0.15 | 45 | 25 | 24 | Moderate feeling of sweetness |
| 3.5 | 5.20 | 0.36 | 18 | 39 | 26 | Strong feeling of sweetness |
| 4.0 | 5.05 | 0.39 | 16 | 37 | 26 | Strong feeling of sweetness |
| 5.0 | 4.69 | 0.52 | 15 | 38 | 32 | Moderate feeling of sweetness and sourness |
| 6.0 | 4.51 | 0.59 | 17 | 36 | 34 | Moderate feeling of sourness |

### Example 2 (Comparative Example): Preparation of fermented whey preparation (where lactase was not used)

A test and evaluation were carried out in the same manner as in Example 1, except that the lactase (lactose degradation enzyme) was not added in the lactic acid fermentation.
The results were as shown in Table 2.

[Table 2]

**Table 2**

| Elapsed [hr] | pH [-] | Acidity [%] | Lactose [g/L] | Glucose [g/L] | Galactose [g/L] | Flavor |
|---|---|---|---|---|---|---|
| 0.0 | 6.35 | 0.14 | 102 | 0 | 0 | |
| 1.0 | 6.30 | 0.15 | 107 | 0 | 0 | |
| 3.5 | 5.14 | 0.34 | 99 | 0 | 0 | |
| 4.0 | 4.99 | 0.43 | 101 | 0 | 0 | Slight feeling of sourness |
| 5.0 | 4.67 | 0.55 | 96 | 0 | 0 | Moderate feeling of sourness |
| 6.0 | 4.48 | 0.62 | 96 | 0 | 0 | Strong feeling of sourness |

### Example 3 (Comparative Example): Preparation of fermented whey preparation (where lactic bacteria was not used)

A test and evaluation were carried out in the same manner as in Example 1, except that the predetermined lactic bacteria were not added in the lactic acid fermentation (although the lactase was added).
The results were as shown in Table 3.

[Table 3]

**Table 3**

| Elapsed time | pH [-] | Acidity [%] | Lactose [g/L] | Glucose [g/L] | Galactose [g/L] | Flavor |
|---|---|---|---|---|---|---|
| 0.0 | 6.27 | 0.20 | 106 | 6 | 8 | |
| 2.0 | 6.28 | 0.20 | 18 | 38 | 33 | Moderate feeling of sweetness |
| 4.0 | 6.22 | | 3 | 47 | 40 | Moderate feeling of sweetness |
| 6.0 | 6.26 | | 2 | 48 | 41 | Moderate feeling of sweetness |
| 24.0 | 6.27 | | 1 | 54 | 54 | Strong feeling of sweetness |

### Product Examples of beverages

The following beverage products which are beverages according to the present invention can be produced according to the following formulation using the fermented whey preparation produced in Example 1 (hereinafter referred to as "whey fermented milk") by the method according to the present invention.
In the following description, ratio or % is by weight unless otherwise specified.

### Formulation Example 1 (Beverage 1):

[Table 4]

**Table 4**

| | Mixing ratio (%) | Charged amount (g) |
|---|---|---|
| Whey fermented milk | 19.05 | 190.5 |
| Sugar | 9.00 | 90.0 |
| Glucose fructose liquid sugar | 0.60 | 6.0 |
| Citric acid (20%) | 0.10 | 1.0 |
| Stabilizer (soybean polysaccharide) (San-Ei Gen F.F.I., Inc.) | 0.35 | 3.5 |
| Yogurt flavor | 0.15 | 1.5 |
| Water | 70.8 | 707.5 |
| Total | 100.00 | 1000.0 |

### Formulation Example 2 (Beverage 2):

[Table 5]

**Table 5**

| | Mixing ratio (%) | Charged amount (g) |
|---|---|---|
| Whey fermented milk | 19.05 | 95.3 |
| Sugar | 8.00 | 40.0 |
| Glucose fructose liquid sugar | 1.60 | 8.0 |
| Citric acid (20%) | 0.10 | 0.5 |
| Stabilizer (HM pectin) (CP Kelco.) | 0.50 | 2.5 |
| Yogurt flavor | 0.15 | 0.8 |
| Water | 70.6 | 353.0 |
| Total | 100.00 | 500.0 |

### Formulation Example 3 (Beverage 3):

[Table 6]

**Table 6**

| | Mixing ratio (%) | Charged amount (g) |
|---|---|---|
| Whey fermented milk | 19.05 | 190.5 |
| Sugar | 3.00 | 30.0 |
| Glucose fructose liquid sugar | 6.60 | 66.0 |
| Sodium citrate (20%) | 0.10 | 1.0 |
| Stabilizer (CMC) (Nippon Paper Industry Co., Ltd.) | 0.40 | 4.0 |
| Yogurt flavor | 0.15 | 1.5 |
| Water | 70.7 | 707.0 |
| Total | 100.00 | 1000.0 |

## Claims

1. A fermented whey preparation produced by carrying out high-temperature sterilization of an aqueous whey protein solution having a solid content of 11 to 35% by weight and a pH value adjusted to 6.5 to 8.0, then subjecting the sterilized aqueous whey protein solution to lactic acid fermentation, and homogenizing the resultant fermentation liquor,
wherein lactose contained in the sterilized aqueous whey protein solution obtained by the high-temperature sterilization is enzymatically degraded with lactase at a stage before the lactic acid fermentation, during the lactic acid fermentation and/or after the lactic acid fermentation to enhance sweetness.

2. The fermented whey preparation according to claim 1, which is produced by performing the enzymatic degradation of lactose with lactase either both before the lactic acid fermentation and during the lactic acid fermentation or only during the lactic acid fermentation.

3. The fermented whey preparation according to claim 1 or 2, wherein, in the lactic acid fermentation step, lactic acid is produced by fermentation with lactic bacteria or yeast.

4. The fermented whey preparation according to any one of claims 1 to 3, wherein the high-temperature sterilization is carried out at a temperature of 91°C to 99°C for 5 to 15 min or at a temperature of 100°C to 150°C for 1 to 30 sec.

5. The fermented whey preparation according to any one of claims 1 to 4, wherein the aqueous whey protein solution is adjusted to pH 6.6 to 7.6.

6. The fermented whey preparation according to any one of claims 1 to 5, wherein, when the sterilized aqueous solution obtained by the high-temperature sterilization contains coagulates, the coagulates have a particle diameter of 2 to 100 µm and the aqueous solution as such is subjected to the step of lactic acid fermentation.

7. A beverage comprising a fermented whey preparation according to any one of claims 1 to 6.

8. A beverage produced by adding an additive component for beverages to a fermented whey preparation according to any one of claims 1 to 6 and subjecting the obtained mixture to high-temperature sterilization treatment at 100°C to 150°C for 1 to 30 sec.

9. A method for producing a fermented whey preparation, comprising carrying out high-temperature sterilization of an aqueous whey protein solution having a solid content of 11 to 35% by weight and a pH value adjusted to 6.5 to 8.0 at a high temperature, then subjecting the sterilized aqueous whey protein solution to lactic acid fermentation, and homogenizing the resultant fermentation liquor to give the fermented whey preparation,
wherein the method comprises the steps of enzymatically degrading lactose contained in the sterilized aqueous whey protein solution obtained by the high-temperature sterilization with lactase, before the lactic acid fermentation, during the lactic acid fermentation
and/or after the lactic acid fermentation, to enhance sweetness.

10. The method according to claim 9, wherein the enzymatic degradation of lactose with lactase is carried out at a stage either both before the lactic acid fermentation and during the lactic acid fermentation or during the lactic acid fermentation.

11. The method according to claim 10, wherein sourness produced by the lactic acid fermentation and sweetness produced by enzymatic degradation with lactase are regulated by regulating the fermentation time to adjust the flavor of the whole whey preparation.

12. The method according to any one of claims 9 to 11, wherein, in the lactic acid fermentation step, lactic acid is produced by fermentation with lactic bacteria or yeast.

13. The method according to any one of claims 9 to 12, wherein the high-temperature sterilization is carried out at a temperature of 91°C to 99°C for 5 to 15 min or at a temperature of 100°C to 150°C for 1 to 30 sec.

14. The method according to any one of claims 9 to 13, wherein the aqueous whey protein solution is adjusted to pH 6.6 to 7.6.

15. The method according to any one of claims 9 to 14, wherein, when the sterilized aqueous solution obtained by the high-temperature sterilization contains coagulates, the coagulates have a particle diameter of 2 to 100 µm and the aqueous solution as such is subjected to the step of lactic acid fermentation.

16. A method for producing a beverage, comprising the steps of:
adding an additive component for beverages to a fermented whey preparation produced by a method according to any one of claims 9 to 15 and subjecting the obtained mixture to high-temperature sterilization treatment at 100°C to 150°C for 1 to 30 sec to give a beverage.
